# EUROPEAN PATENT APPLICATION

(11) **EP 1 452 293 A1**
(43) Date of publication of application: **01.09.2004**
(21) Application number: 04004267.3
(22) Date of filing: 25.02.2004
(51) Int. Cl.: B29C 45/28, B29C 45/30

(54) **Injection molding system with flow control and method of injection molding**

(30) Priority: 25.02.2003 US 449521 P
(71) Applicant: MOLD-MASTERS LIMITED, Georgetown Ontario L7G 4X5 (CA)
(72) Inventor: Babin, Denis, Georgetown Ontario, L7G 5W8 (CA)
(74) Representative: Grünecker, Kinkeldey, Stockmair & Schwanhäusser Anwaltssozietät

(57) **Abstract**

An injection molding system includes a manifold (102) and a valve gated hot runner nozzle (104). The gating mechanism includes an actuated valve pin (110), where the mold gate orifice (108) is open when the valve pin (110) is in a first position to allow melt to flow there through. The mold gate orifice (108) is closed when the valve pin (110) is in a second position to prevent melt from flowing there through. A first flow control surface (114) is disposed on said valve pin (110) within the melt channel (107) of the nozzle (104). The first flow control surface (114) has a complementary geometry with that of the melt channel (107) at a second flow control surface (116). The valve pin (110) is raised and lowered to a lesser degree than that required to seat and unseat the valve pin head (111) to constrict or release the flow of a melt stream in the melt channel (107).

## Description

### CROSS-REFERENCE TO RELATED APPLICATIONS

This application claims the benefit of provisional application 60/449,521, filed February 25, 2003, which is hereby incorporated by reference in its entirety.

### BACKGROUND OF THE INVENTION

### Field of the Invention

The present invention relates generally to injection molding technology, and more particularly to the dynamic control of the amount of plastic injected per injection cycle.

### Background of the Invention

Injection molding of plastic parts is a common manufacturing practice. Various articles of commercial value such as plastic bottles, toothbrushes, and children's toys, are made using well-known injection molding techniques. Injection molding generally involves melting plastic then forcing the melt stream at high temperatures and pressures through one or more gates into a mold cavity. The melt cools in the shape of the mold cavity, which is opened to eject the finished part.

A valve gated injection molding apparatus is well known, as shown and described in U.S. Patent No. 4,380,426 to Gellert, incorporated herein in its entirety by reference thereto. Usually a valve pin has a cylindrical or tapered front end and reciprocates between a retracted open position and a forward closed position in which the front end is seated in a gate. In some applications, the valve pin functions in the reverse direction and closes in the retracted position.

Valve-gated mechanisms are, however, typically designed to open and close the gates in a binary fashion, i.e., the gate is either open or it is closed without allowing for a partially opened scenario in which the melt flow rate or amount is controlled. In some manufacturing processes, the ability to control the melt stream during the shot is highly desirable. For example, in a multi-gated system, wherein a single mold cavity is fed melt through multiple gates, a common manifold serves all of the gates. However, a "knit line" is formed at the interface where melt flowing from one gate meets melt flowing from another gate. Even though all of the gates are commonly fed, the ability to control the flow rate through each gate individually would allow the designer to control the location of the knit line for structural or aesthetic purposes.

Another instance in which control over the melt stream flow is desirable is when a number of parts are simultaneously molded. Each mold cavity is fed melt by an individual gate. However, the mold cavities are not necessarily all the same size, such as when components of an interlocking piece are simultaneously molded, as in the sections of a cellular telephone casing or the base and cover of a packaging system. The common melt stream is important, so that the plastic characteristics are as uniform as possible between the pieces; however, as the pieces are not of a uniform size, one mold customarily takes longer to fill than the other(s). If the larger mold cavity could be filled more quickly, then both parts would be ready for ejection from the mold at the same time.

Various methods exist in the art to provide this type of control over the melt stream. The gates could be individually re-tooled for every new product, but this is expensive and time-consuming. U.S. Patent No. 5,556,582 to Kazmer *et al.,* incorporated herein in its entirety by reference thereto, describes a system wherein multiple adjustable valve pins are located each in its respective gate within a manifold, wherein each gate is fluidly connected to a common mold cavity. Each valve pin can be dynamically adjusted by a computer according to pressure data read at or near the injection point into the mold. Each valve pin has a tapered head and each melt channel has a complementary geometry, such that the melt stream is slowed to an eventual full stop. Also, as the system is used, the repetitive action of each valve pin produces significant wear on the tip of each valve pin. This wear, a result of repeated impact with the mold cavity, eventually reduces the cross-sectional diameter of the tip of each valve pin. As the tip of each valve pin is also used for flow control purposes, the ability of the system to control the flow effectively is diminished or eliminated over time.

Another system is described in U.S. Patent Application Pub. No. 2002/0121713 to Moss *et al.,* incorporated herein in its entirety by reference thereto. In this publication, a valve pin is located in the manifold, with a tapered valve pin head disposed at the inlet point to a hot runner nozzle. The melt channel at the inlet point has a corresponding geometry to the tapered pin head, such that when the pin head is pushed into the inlet, the melt stream slows to an eventual stop.

Yet another system is described in PCT International Publication No. WO 01/21377 to Kazmer *et al.,* incorporated herein in its entirety by reference thereto. In this publication, the manifold includes "shooting pot" technology. A portion of the melt stream is diverted from the manifold melt channel into a separate compartment or "well". Disposed within this well is an actuated ram, which can be positioned to seal the opening of the well. A nozzle is located downstream of the well. The flow of melt through a mold gate orifice is controlled by an actuated valve pin. When the melt stream is introduced into the manifold melt channel, the valve pin is seated within the mold gate orifice to prevent flow into a mold cavity. The ram is located in a retracted position so that a volume of melt from the melt stream may be diverted into the well and contained therein. To start the shot, a gating mechanism located upstream from the well closes the manifold melt channel, thereby preventing the introduction of new melt into the well. The valve pin is unseated from the mold gate orifice, and the ram is moved forward at a first velocity to force melt into the mold cavity. A system of pressure sensors measures the pressure in the system and compares that pressure reading to a target pressure profile. If greater pressure is required, the ram velocity is increased. Alternatively, if lesser pressure is required, the ram velocity is slowed. When the ram reaches its lowermost position, the mold cavity is full, and the mold gate orifice is closed. Through this manipulation of the ram velocity, the flow rate of the melt stream can be controlled. This control over the melt stream requires completely closing off of one portion of the manifold melt channel in order to manipulate the melt stream in another portion thereof.

However, none of these systems provides the ability to control the melt stream in the nozzle. Having the point of flow control closer to the mold gate orifice leaves less lag time between activating the flow control and realizing the changes in the flow of the melt stream at the mold gate orifice. Further, none of these systems provide for flow control on the valve pin where the flow control surface is not the valve pin head. Having a separate flow control surface affords effective flow control over time, even if the tip of the valve pin head becomes worn. Finally, none of these systems provides non-mechanical ways to control the flow of the melt stream, such as by manipulating the viscosity of the melt stream. A simple mechanism for achieving a fine gradation of control over the flow of melt can improve the efficiency of the system, saving the manufacturer time and money.

In addition, another problem encountered in the art is that the flow of molten material through a manifold is not always balanced from a flow rate view point due to the uneven heat profile across the manifold melt channel generated by shear stress. In these circumstances the melt flow that arrives at a mold gate via each nozzle is not symmetrically balanced from a temperature and viscosity view point with respect to an axis along the flow. This results in molded parts that either have slightly different weights or have slightly different dimensions. This undesirable variation in the parts quality occurs between parts molded during the same cycle time or between parts molded in subsequent molding cycles.

It is accordingly another objective of the present invention to provide a method and an apparatus to consistently mold quality parts. By providing independently actuatable valve pins, the present invention provides balancing of the melt flow from the manifold through each respective nozzle and into the respective mold cavities.

### SUMMARY OF THE INVENTION

Accordingly, disclosed herein is an injection molding system wherein multiple levels of control can be attained over the melt stream. In one embodiment of the present invention, an injection molding apparatus includes an injection molding manifold having a plurality of melt channels that are in communication with a plurality of hot runner nozzles. Each hot runner nozzle has a melt channel and communicates with a mold cavity or a portion of a mold cavity via a mold gate. Each hot runner nozzles includes a valve pin located at least partially in the nozzle melt channel. The valve pin of each nozzle has *a dual function:* (1) to open and close the mold gate and (2) to further accurately and individually control the amount of flow delivered by each nozzle into the mold cavity. The mold gate orifice is open when the valve pin is in a first position to allow melt to flow there through, and the mold gate orifice is closed when the valve pin is in a second position to prevent melt from flowing there through. In order to accurately and individually control the amount of flow delivered by each nozzle into the mold cavity, each valve pin incorporates at least one flow control surface that can be located with accuracy at a desired position with respect to the mold gate inside the nozzle melt channel. The flow control surface is disposed on the shaft of the valve pin within the melt channel of the nozzle and has a complementary geometry with that of the melt channel. The flow control surface is positionable in various raised and lowered positions by the actuation mechanism to constrict or release the flow of the melt stream when the valve tip is not seated within the mold gold orifice.

In the injection molding operation, the position of each flow control surface of each valve pin is adjusted to compensate for the flow pattern imbalance generated by the manifold and other factors. If the melt has a higher viscosity in one nozzle of the system than in another nozzle of the system, the position of the flow control surface will be adjusted so that the amount of molten material injected into each mold cavity is substantially the same, per one injection cycle and from one cycle to the next cycles. In one embodiment of the invention the movement of the valve pin and therefore the location of the flow control surface can be pre-programmed based on test data obtained during an initial trial period. In another embodiment of the invention the movement of the valve pin and therefore the position of the flow control surface is interactively determined through mold processing data collected from processing sensors located in the mold cavity and/or along the melt channels of the nozzles and manifolds. The processing sensors may pressure and/or temperature sensors. The pressure and temperature data provides indirect information regarding the viscosity and the flow rate through each nozzle. This information collected by a controller is directed to a servo piston or to an electrical actuator linked to the valve pin.

In one embodiment of the present invention, each mold cavity is fluidly connected to only one hot runner nozzle via a single mold gate wherein each mold cavity is of substantially equal volume. In another embodiment, each mold cavity is fluidly connected to one hot runner nozzle via a single mold gate wherein at least one mold cavity is of a different volume. In each of these embodiments, there is a need to control independently the amount of melt fed through each nozzle and through each mold gate to produce better molded parts in terms of weight. By positioning the flow control surface of each valve pin at a certain distance with respect to the mold gate, the flow rate of the melt through each nozzle can be controlled individually during each injection cycle.

In another embodiment of the present invention, a valve-gated hot runner nozzle is fed melt from a manifold. The mold gate orifice includes an actuated valve pin, where the mold gate orifice is open when the valve pin is in a first position to allow melt to flow there through. The mold gate orifice is closed when the valve pin is in a second position to prevent melt from flowing there through. A flow control surface is disposed on the shaft of the valve pin within the melt channel of the nozzle. The flow control surface has a complementary geometry with that of the melt channel. The flow control surface is raised and lowered by the actuation mechanism to constrict or release the flow of the melt stream. The movement of the flow control surface could be pre-programmed or could be dynamically triggered using pressure and temperature sensors at or near the nozzle. An additional level of control over the flow of the melt stream into the mold cavity is realized by manipulating the heaters in the hot runner nozzle. If a faster flow of melt into the mold cavity is desired, the temperature of the heaters could be increased, thereby lowering the viscosity of the melt stream and causing the melt to flow faster. If a slower flow of melt into the mold cavity is desired, the temperature of the heaters could be decreased, thereby increasing the viscosity of the melt stream and causing the melt to flow more slowly.

### BRIEF DESCRIPTION OF THE DRAWINGS/FIGURES

The accompanying drawings, which are incorporated herein and form a part of the specification, illustrate the present invention and, together with the description, further serve to explain the principles of the invention and to enable a person skilled in the pertinent art to make and use the invention.

FIG. 1 shows a sectional schematic view of an injection molding system according to a first embodiment of the present invention with a valve pin in a first position.

FIG. 1A shows an enlarged view of a nozzle of the injection molding system of FIG. 1.

FIG. 1B shows an enlarged view of an alternate nozzle for use in the injection molding system of FIG. 1.

FIG. 1C shows an enlarged view of a second alternate nozzle for use in the injection molding system of FIG. 1.

FIG. 2 shows the injection molding system of FIG. 1 with the valve pin in a second position.

FIG. 2A shows an enlarged view of the nozzle of the injection molding system of FIG. 2.

FIG. 3 shows a sectional schematic view of an injection molding system according to a second embodiment of the present invention with a valve pin in a first position.

FIG. 3A shows an enlarged view of a nozzle of the injection molding system of FIG. 3.

FIG. 4 shows the injection molding system of FIG. 3 with the valve pin in a second position.

FIG. 4A shows an enlarged view of the nozzle of the injection molding system of FIG. 4.

FIG. 5 shows a sectional schematic view of an injection molding system according to a third embodiment of the present invention with a valve pin in a first position.

FIG. 5A shows an enlarged view of a nozzle of the injection molding system of FIG. 5.

FIG. 6 shows the injection molding system of FIG. 5 with the valve pin in a second position.

FIG. 6A shows an enlarged view of the nozzle of the injection molding system of FIG. 6.

FIG. 7 shows a sectional schematic view of an injection molding system according to a fourth embodiment of the present invention with a valve pin in a first position.

FIG. 7A shows an enlarged view of a nozzle of the injection molding system of FIG. 7.

FIG. 8 shows the injection molding system of FIG. 7 with the valve pin in a second position.

FIG. 8A shows an enlarged view of the nozzle of the injection molding system of FIG. 8.

FIG. 9 shows a sectional schematic view of an injection molding system according to a fifth embodiment of the present invention with a valve pin in a first position.

FIG. 9A shows an enlarged view of a nozzle of the injection molding system of FIG. 9.

FIG. 10 shows the injection molding system of FIG. 9 with the valve pin in a second position.

FIG. 10A shows an enlarged view of the nozzle of the injection molding system of FIG. 10.

FIG. 11 shows an application of an injection molding system according to a sixth embodiment of the present invention with valve pins in a first position.

FIG. 12 shows the application according to FIG. 11 with the valve pins in a second position.

FIG. 13 shows a second application of the injection molding system of FIG. 11, with valve pins in a first position.

FIG. 14 shows the application of FIG. 13 with the valve pins in a second position.

### DETAILED DESCRIPTION OF THE INVENTION

Specific embodiments of the present invention are now described with reference to the figures, where like reference numbers indicate identical or functionally similar elements.

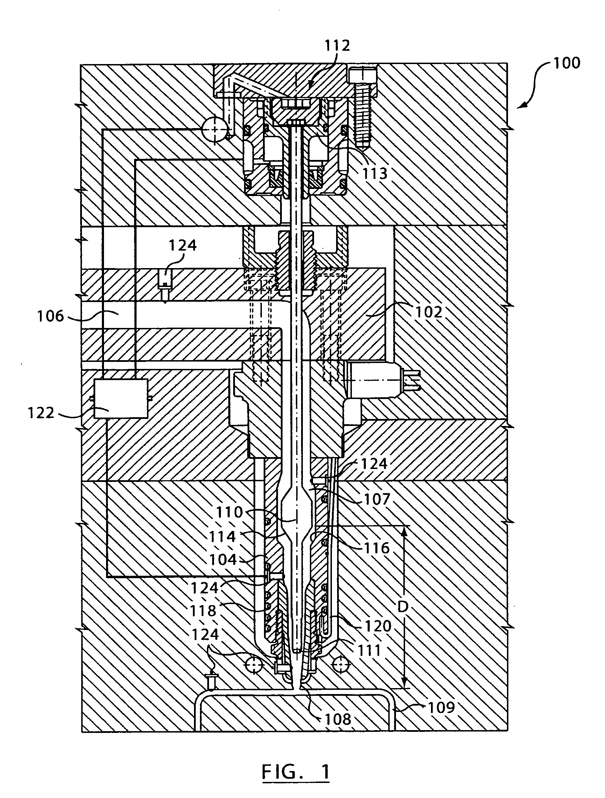

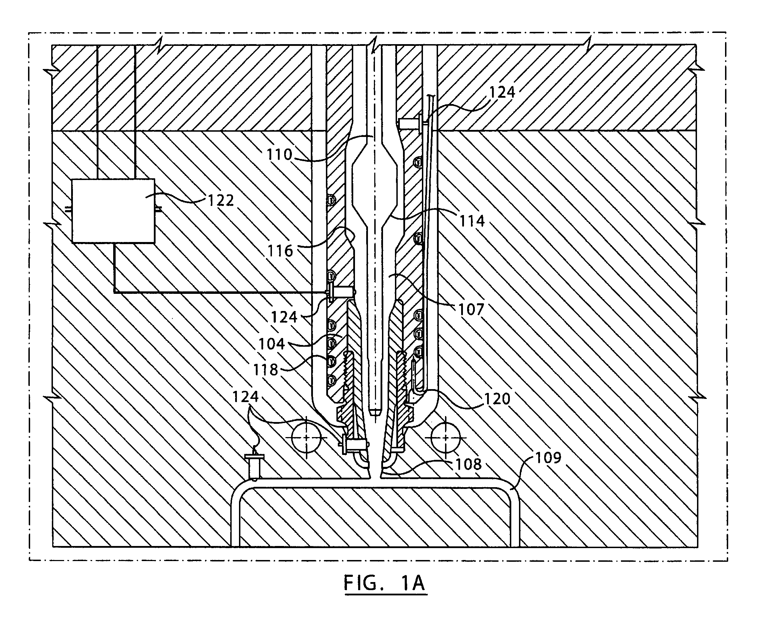

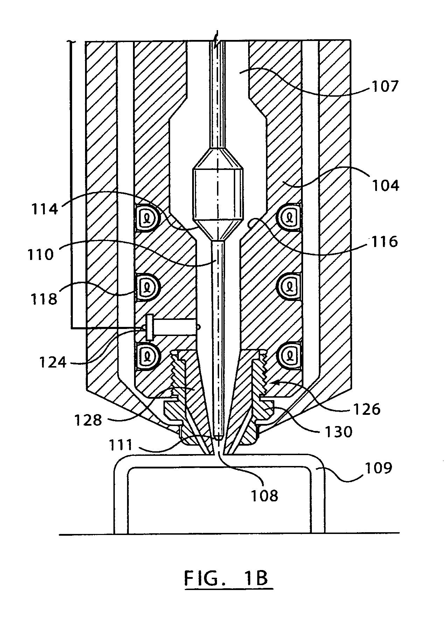

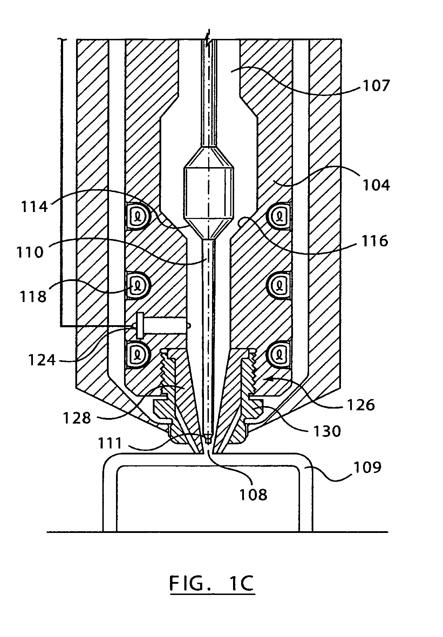

Referring now to FIG. 1, a first embodiment of the invention is described. An injection molding system 100 includes a manifold 102 and a plurality of nozzles, such as nozzle 104. A manifold melt channel 106 is disposed within manifold 102 and conveys melt to a plurality of nozzle channels, such as for example nozzle melt channel 107, which further conveys the melt through a gate 108 into mold cavity 109. In this embodiment, there are several mold cavities, such as for example mold cavity 109, in communication with several nozzles (not shown), such as nozzle 104. The mold cavities may be of equal or almost equal volume, or may be of different volumes. Each cavity has a single mold gate 108. The present invention allows multiple cavities to be filled in the same cycle or time period by "balancing" the melt flow through manifold 102, as will be explained in more detail below.

As shown in FIG. 1B, nozzle 104 is preferably a valve-gated hot runner nozzle which includes a two-piece injection nozzle seal 126, as shown and described in U.S. Patent No. 5,299,928 to Gellert, incorporated herein in its entirety by reference thereto. Nozzle seal 126 provides the capability of allowing fast heat transfer within nozzle 104 while avoiding undue heat losses to a much cooler mold cavity 109. Nozzle seal 126 includes an inner hollow piece 128 and an outer hollow piece 130. Inner hollow piece 128 is formed of a highly thermally conductive material such as beryllium copper alloy. Outer hollow piece 130 is formed of a material that is less thermally conductive than the material of inner hollow piece 128, such as titanium alloy. Outer hollow piece 130 has contact with both heated nozzle 104 and mold cavity 109. This twofold combination provides sufficient conductivity along inner piece 128 to maintain a rapid thermodynamic cycle and sufficient thermal separation through outer piece 130 to avoid undue heat loss to mold cavity 109.

FIG. 1C shows another optional feature of valve-gated nozzle 104. This arrangement provides for precise alignment of valve pin 110 by implementing double alignment in the geometry of valve pin head 111, which geometry guides the seating of valve pin head 111 within mold gate orifice 108. This gating solution is described in co-pending U.S. Patent Application No. 10/629,699 to Fischer *et al.,* filed July 30, 2002, and U.S. Published Application No. 2003/0170340 to Sicilia *et al.,* filed February 21, 2003; the specifications of which are hereby incorporated by reference in their entirety. The gating solution helps to eliminate gate wear and improve both gate and hot runner system reliability and durability. Valve pin head 111 has a cylindrical shape wherein the diameter thereof decreases twice in a step-down fashion. The geometry of nozzle melt channel 107 in the vicinity of mold gate orifice 108 matches this step-down decrease in diameter. This geometry allows not only for guided alignment of valve pin 110, but mold gate orifice 108 can also be made smaller, thereby decreasing the size of the vestige.

Referring back to FIG. 1, mold gate orifice 108 is preferably sized to receive a front portion of a valve pin 110 that is disposed within nozzle melt channel 107. The shaft of valve pin 110 extends through a portion of manifold melt channel 106 to a valve pin actuation mechanism 112, which is preferably disposed longitudinally above manifold 102. Mold gate orifice 108 allows the flow of melt into mold cavity 109. In a first position, valve pin head 111 is unseated from mold gate orifice 108 by operation of valve pin actuation mechanism 112 to allow melt to flow through mold gate orifice 108 into mold cavity 109. In a second position, not shown in this embodiment, valve pin head 111 is seated within mold gate orifice 108 by operation of valve pin actuation mechanism 112 to prevent the flow of melt into mold cavity 109.

Valve pin actuation mechanism 112 preferably includes a piston 113 driven by any of the various actuation driving mechanisms known in the art, including but not limited to pneumatic, hydraulic, rack and pinion, or cam and lever devices. A pneumatic driving system operates by linking an external air source to the piston driving mechanism with valves controlled by a timing circuit which applies and releases the pressure in a repetitive timed sequence in conjunction with the application of pressure to the melt from the molding system. A hydraulic driving system operates in the same manner as the pneumatic system, only hydraulic fluid is substituted for air. In a rack and pinion mechanism, the pinion is engaged with the shaft of valve pin 110 by threads. The movement of the rack is controlled, such as by a servo valve controlled cylinder. As the rack is moved, the pinion engages with the threads, causing valve pin 110 to move.

In an alternate embodiment, a bladder piston, as shown and described in the co-pending U.S. Published Application No. 2003/0224086, filed on March 14, 2002 by the same assignee, which is incorporated herein in its entirety by reference thereto, may be used. A bladder piston is an expandable and elongated bag which shortens in length when filled with a pressurized fluid like air, water, or oil. One end of the bladder is affixed to a valve pin such that, as the bladder is pressurized, it contracts in length and the valve pin is unseated from the mold gate orifice, which allows the melt to flow into the mold cavity. Similarly, depressurizing the bladder causes the bladder to increase in length, which seats the valve pin in the mold gate orifice and stops the flow of the melt into the mold cavity.

Valve pin actuation mechanism 112 can be controlled in a variety of ways. Preferably, pressure transducers 124 are linked to servo valve 122. Servo valve 122 is linked to the driving mechanism. When the pressure inside the system, as measured by pressure transducers 124, reaches a first level, servo valve 122 switches so that fluid or air from the driving mechanism can flow to valve pin actuation mechanism 112, causing piston 113 to seat valve pin 110 within mold gate orifice 108. When pressure in the system is measured by pressure transducers 124 to be a second level, servo valve 122 switches so that fluid or air from the driving mechanism is shut off, causing piston 113 to unseat valve pin 110 from mold gate orifice 108. Alternatively, valve pin actuation mechanism 112 may be controlled by a computer that follows a pre-determined cycle or receives input from pressure transducers 124. The computer would signal circuitry connected to the driving mechanism according to the cycle, and the circuitry would trigger the driving mechanism, and piston 113 would be driven up or down. Finally, valve pin actuation mechanism 112 may be controlled by an operator who manually triggers the driving mechanism.

Valve pin 110 includes a flow control surface 114. Flow control surface 114 is preferably located between manifold 102 and valve pin head 111. Flow control surface 114 enables control of the amount of melt passing through nozzle 104 via the motion of valve pin 110. Having the point of flow control close to mold gate 108 leaves less lag time between activating the flow control and realizing the changes in the flow of the melt stream at mold gate 108. In the embodiment of FIG. 1, flow control surface 114 is preferably a portion of the shaft of valve pin 110 with a larger diameter than that of the rest of the shaft of valve pin 110 with tapered geometry at the distal end. Nozzle melt channel 107 has a complementary geometry at a second flow control surface 116.

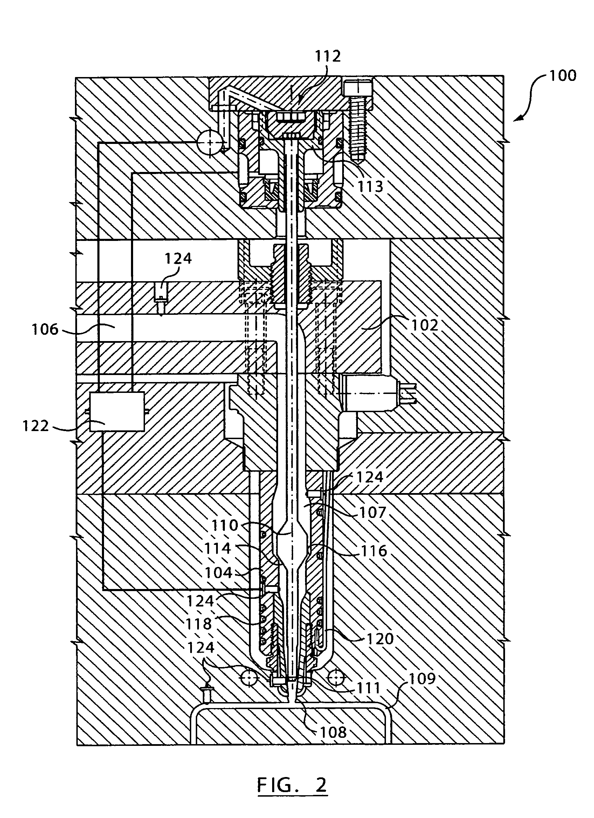

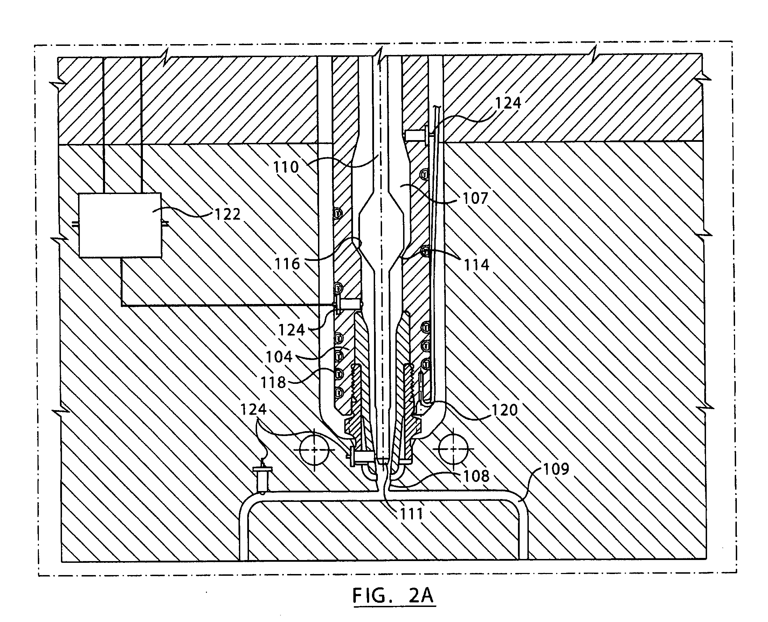

In a first position, shown in FIG. 1, flow control surface 114 is positioned away from second flow control surface 116 so that the flow of melt through nozzle melt channel 107 is not constricted. In a second position, shown in FIG. 2, flow control surface 114 is positioned at or near second flow control surface 116. Due to the complementary geometry of flow control surface 114 and second flow control surface 116, the flow of melt through nozzle melt channel 107 is constricted, so as to decrease the volume of melt, and, thereby, decreasing the flow of material to mold gate orifice 108. Intermediate positioning of flow control surface 116, where the flow of melt through nozzle melt channel 107 is only partly constricted, is also possible. By positioning flow control surface 114 of each valve pin 110 at a certain distance D with respect to mold gate 108, the flow rate of the melt through each nozzle 104 can be controlled individually during each injection cycle. The distance D may vary from one nozzle to another in system 100 such that each mold cavity is filled with substantially the same amount of melt during one injection cycle, thereby "balancing" the melt flow through manifold 102.

"Balancing" the melt flow through manifold 102 is accordingly achieved by regulating and balancing the flow into each mold cavity 109. A method of injection molding designed to balance the melt flow through manifold 102 therefore includes independently actuating each valve pin 110 in its respective nozzle melt channel 107 into an injection open position that is defined as the distance D between flow control surface 114 of valve pin 110 and mold gate 108. Distance D may vary from one nozzle to another in response to a processing condition such that each mold cavity 109 is filled with substantially the same amount of molten material during an injection cycle. The injection open position defined by the distance D of each nozzle 104 is determined by a processing sensor located along the respective nozzle melt channel 107. The processing sensor may be either a temperature sensor 120 or a pressure transducer(s) 124.

The geometry of nozzle melt channel 107 is shown in FIGS. 1 and 2 to have a slightly larger diameter in the region of flow control surface 114. In other words, the diameter of nozzle melt channel 107 increases and then tapers back to the original diameter at a lower end of second flow control surface 116. This geometry allows flow control surface 114, which has a larger diameter than the rest of valve pin 110, to move freely within nozzle melt channel 107. However, many different geometries are contemplated by the present invention. For example, the nozzle melt channel 107 may have a first diameter which is greater than the diameter of flow control surface 114 which then tapers at second flow control surface 116 to a second, smaller diameter.

Each valve pin 110 of each nozzle 104 has *a dual function:* (1) to open and close mold gate 108 and (2) to further accurately and individually control the amount of flow delivered by each nozzle 104 into the respective mold cavity 109. The method of injection molding therefore includes the step of slidingly positioning each valve pin 110 in its respective nozzle melt channel 107 into an injection position to control the flow of the molten material into the respective mold cavity 109. Each valve pin 110 is variably positionable by moving valve pin head 111 downstream towards the respective mold gate 108 to eventually seat in the mold gate and stop the flow of molten material into the respective mold cavity 109, while simultaneously moving first flow control surface 114 on an upstream portion of each valve pin 110 downstream towards corresponding second flow control surface 116 of the respective nozzle melt channel 107 to control the flow rate of the molten material within the respective nozzle melt channel 107. As valve pin 110 moves downstream to seat within gate 108, first flow control surface 114 moves downstream towards second control flow surface 116 to control the flow rate through nozzle melt channel 107. The injection position is determined by a processing sensor located along the respective nozzle melt channel 107. The processing sensor may be either a temperature sensor 120 or a pressure transducer(s) 124.

An additional way to control the flow of the melt stream through mold gate orifice 108 can be included in the design, if nozzle 104 is a hot runner nozzle. Heating element 118 is disposed in nozzle 104. Heating element 118 maintains the temperature of the melt stream so that the injection thereof into mold cavity 109 is facilitated. A temperature sensor 120, preferably a thermocouple, monitors the temperature of the melt stream within nozzle melt channel 107. Although the actual temperatures used depend heavily on the type of plastic used in the melt, generally, higher temperatures reduce the viscosity of the melt stream. At a constant pressure, a reduced viscosity yields a faster flow of the melt stream. Conversely, at lower temperatures, the viscosity of the melt stream is increased and the melt stream flows more slowly.

The viscosity of the melt stream can be dynamically manipulated to control the rate of flow of the melt stream into mold cavity 109. A control loop can be established between temperature sensor 120 and heating element 118. An example of one such control loop follows, although others will be readily recognized by those skilled in the art. A processor, such as a computer or computer chip, can detect the temperature and, optionally, the pressure of the melt stream according to information gathered from temperature sensor 120 and pressure transducers 124. The processor can evaluate the temperature according to a target temperature profile, or the processor can use all of the melt stream characteristics to determine if the flow profile matches a target flow profile. Depending upon the result of this analysis, the processor would perform one of the following tasks: 1) signal an increase in power to heating element 118 in order to increase the temperature thereof, 2) signal a decrease in power to heating element 118 in order to decrease the temperature thereof, or 3) do nothing to maintain the status quo.

This type of dynamic manipulation of the flow of the melt stream can only be achieved when the melt characteristics, such as viscosity and flow rate, are controlled within nozzle 104. This is due to the fact that manifold 102 is necessarily maintained at a constant temperature because, due to the mass of manifold 102, altering the temperature thereof is a slow process. However, as nozzle 104 is relatively small, manipulation of the temperature of the melt stream in real time is possible.

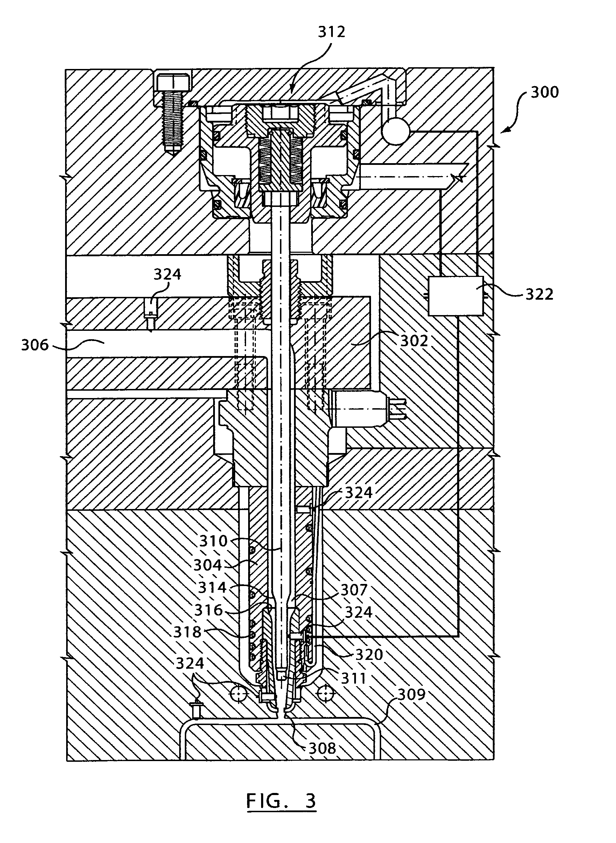

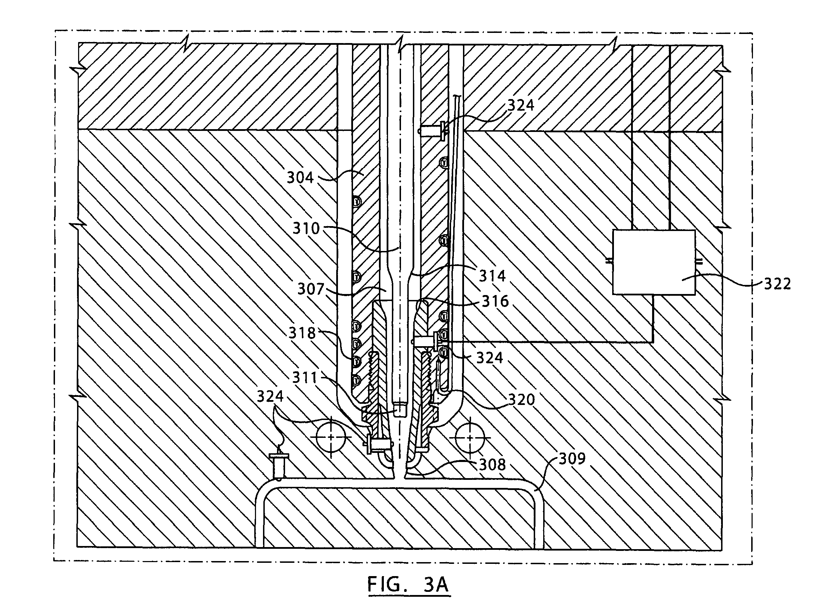

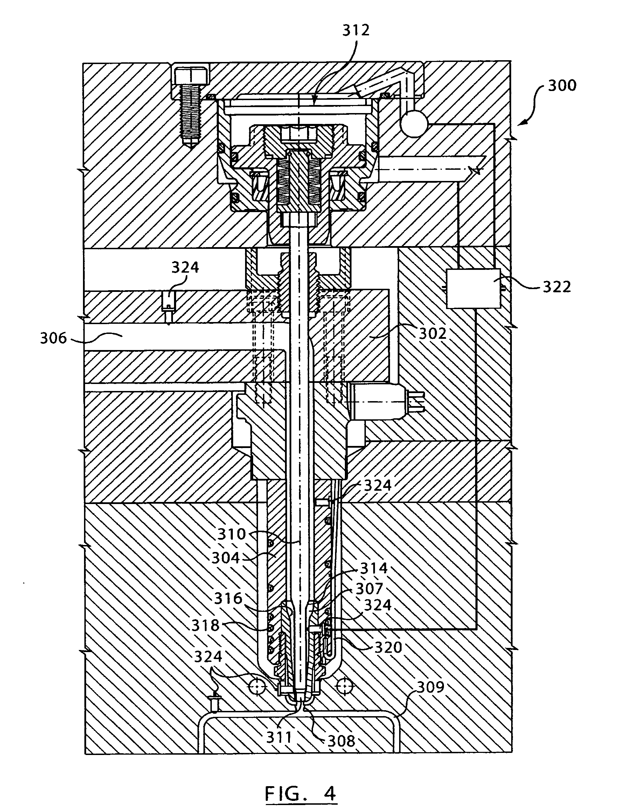

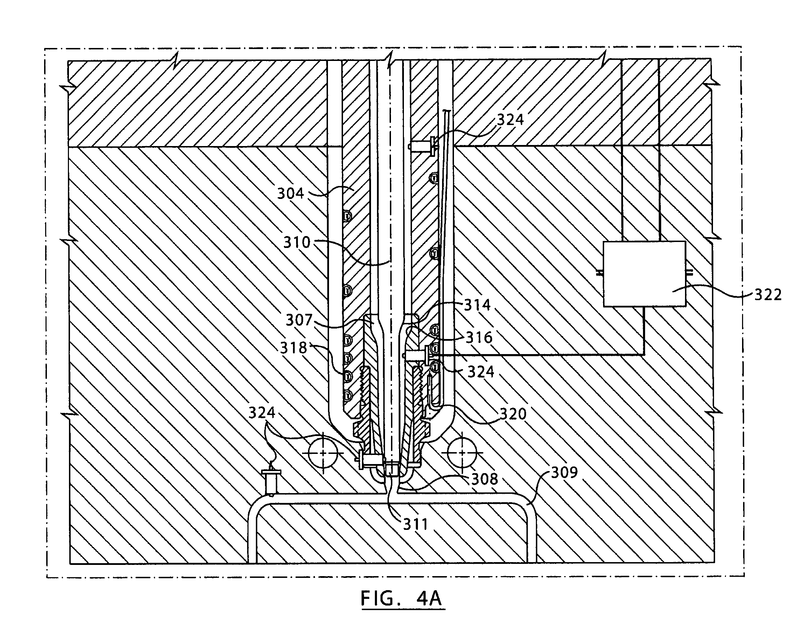

FIGS. 3, 3A, 4, and 4A show another embodiment of the present invention, depicting another possible configuration of a flow control surface 314 and a second flow control surface 316 within an injection molding system 300. System 300 functions similarly as described above with respect to the first embodiment. In this embodiment, flow control surface 314 is located at a transition portion of the shaft of valve pin 310. Above the transition portion and flow control surface 314 the shaft of valve pin 310 has a first outer diameter, and below the transition portion and flow control surface 314 the shaft of valve pin 310 has a second outer diameter. The first outer diameter is larger than the second outer diameter. Nozzle melt channel 307 has a complementary geometry at second flow control surface 316.

In a first position, shown in FIGS. 3 and 3A, flow control surface 314 is positioned away from second flow control surface 316 so that the flow of melt through nozzle melt channel 307 is not constricted. In a second position, shown in FIGS. 4 and 4A, flow control surface 314 is positioned near second flow control surface 316. Due to the complementary geometry of flow control surface 314 and second flow control surface 316, the flow of melt through nozzle melt channel 307 is constricted, so as to decrease the volume of melt, and, thereby, decreasing the flow of material to mold gate orifice 308.

Further, FIGS. 3, 3A, 4, and 4A illustrate an alternate geometry for a valve pin head 311. Valve pin head 311 is relatively longer than valve pin head 111, and therefore extends closer to mold gate 308.

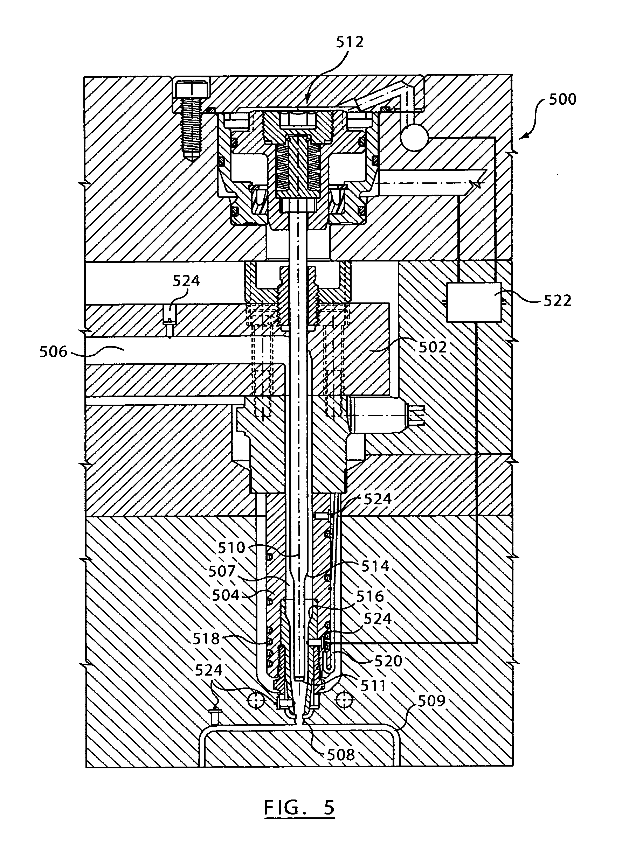

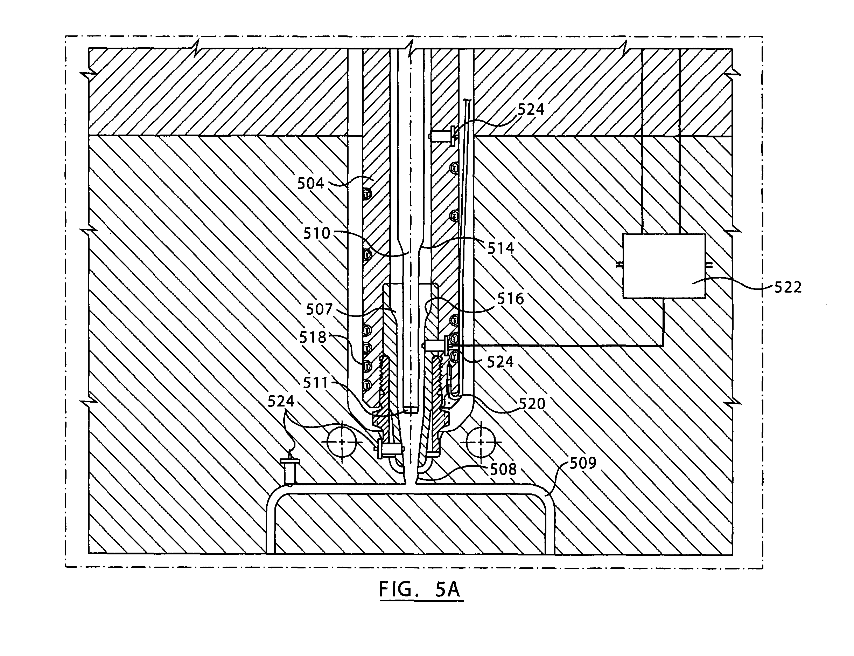

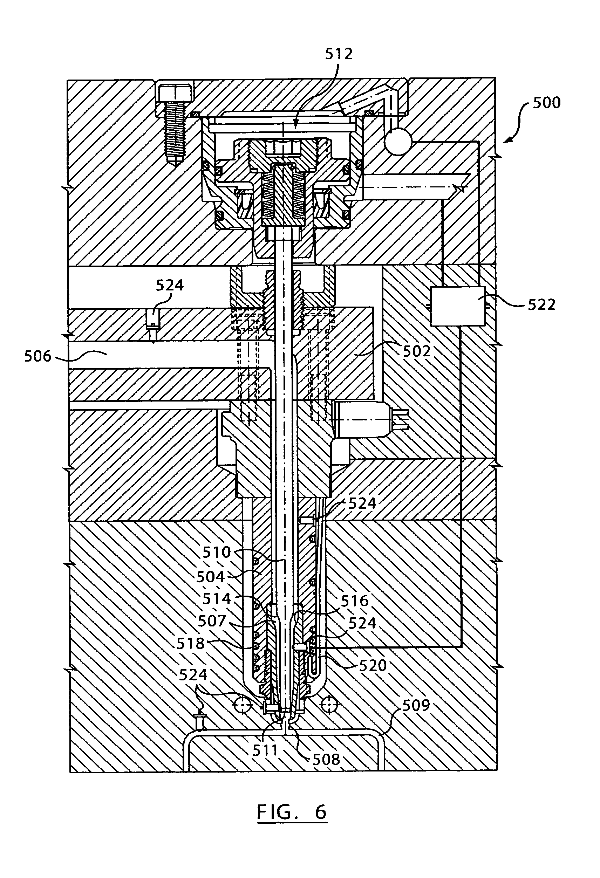

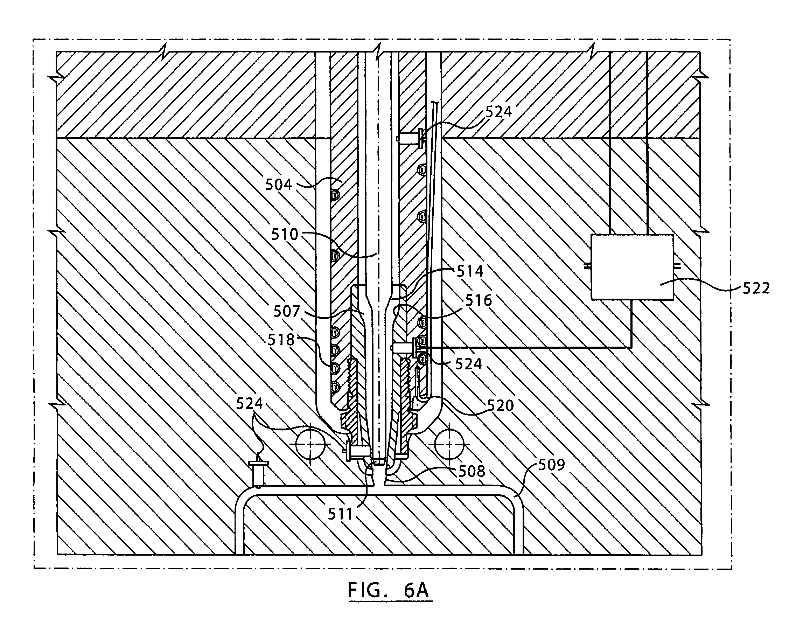

FIGS. 5, 5A, 6, and 6A show another embodiment of the present invention, depicting another possible configuration of a flow control surface 514 and a second flow control surface 516 within an injection molding system 500. System 500 functions similarly as described above with respect to the first embodiment. Similar to the embodiment described in connection with FIGS. 3, 3A, 4, and 4A, flow control surface 514 is located at a transition portion of the shaft of valve pin 510. Above the transition portion and flow control surface 514 the shaft of valve pin 510 has a first outer diameter, and below the transition portion and flow control surface 514 the shaft of valve pin 510 has a second outer diameter. The first outer diameter is larger than the second outer diameter. Nozzle melt channel 507 has a complementary geometry at second flow control surface 516. However, in this embodiment, valve pin head 511 does not utilize the alternate geometry described in connection with FIGS. 3, 3A, 4, and 4A. Rather, valve pin head 511 functions similarly to and resembles valve pin head 111.

In a first position, shown in FIGS. 5 and 5A, flow control surface 514 is positioned away from second flow control surface 516 so that the flow of melt through nozzle melt channel 507 is not constricted. In a second position, shown in FIGS. 6 and 6A, flow control surface 514 is positioned near second flow control surface 516. Due to the complementary geometry of flow control surface 514 and second flow control surface 516, the flow of melt through nozzle melt channel 507 is constricted, so as to decrease the volume of melt, and, thereby, decreasing the flow of material to mold gate orifice 508.

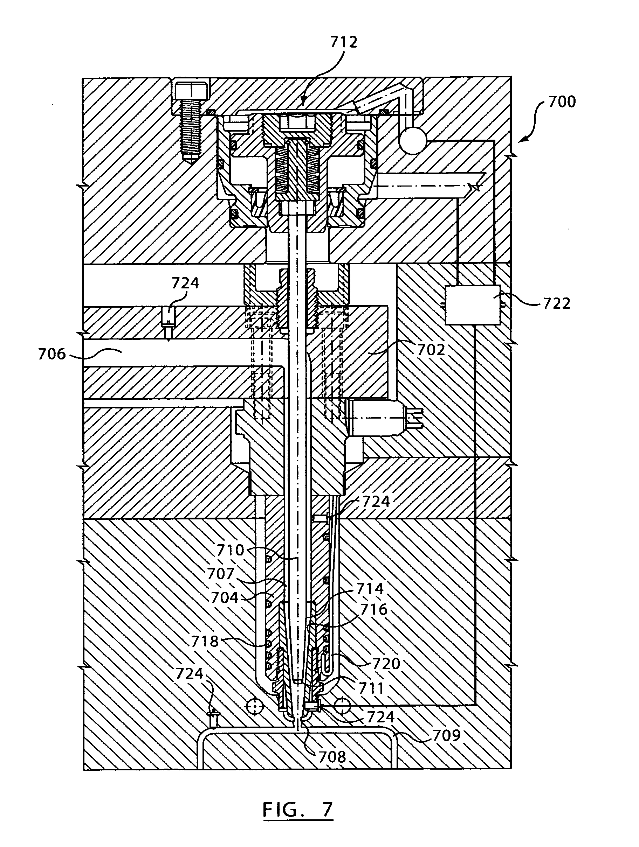

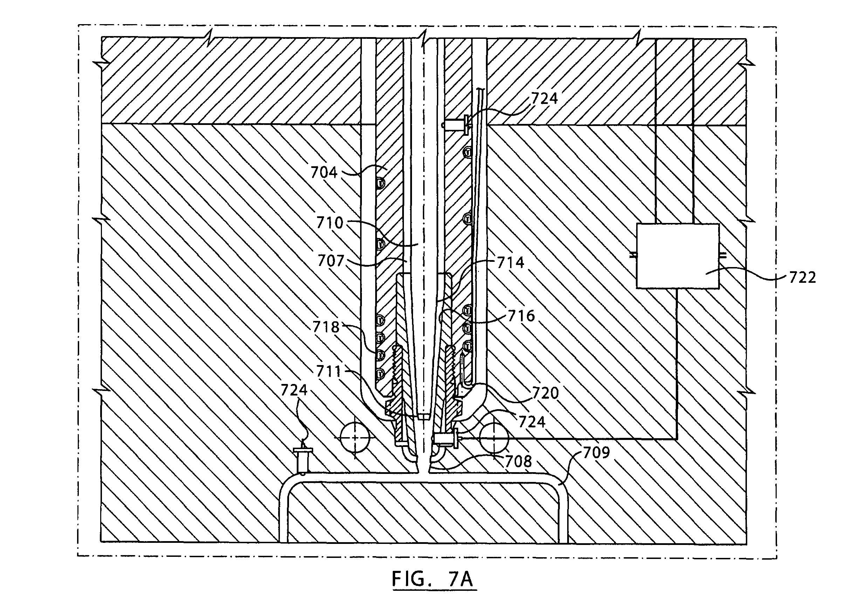

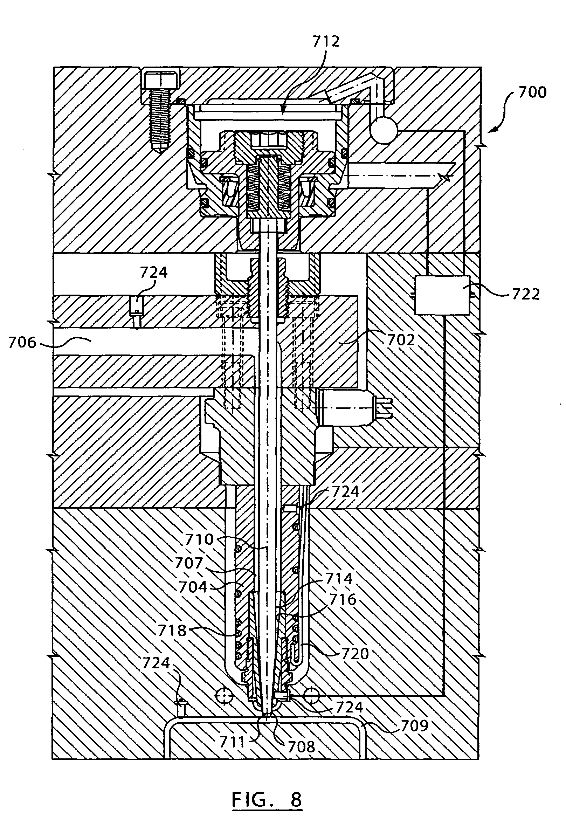

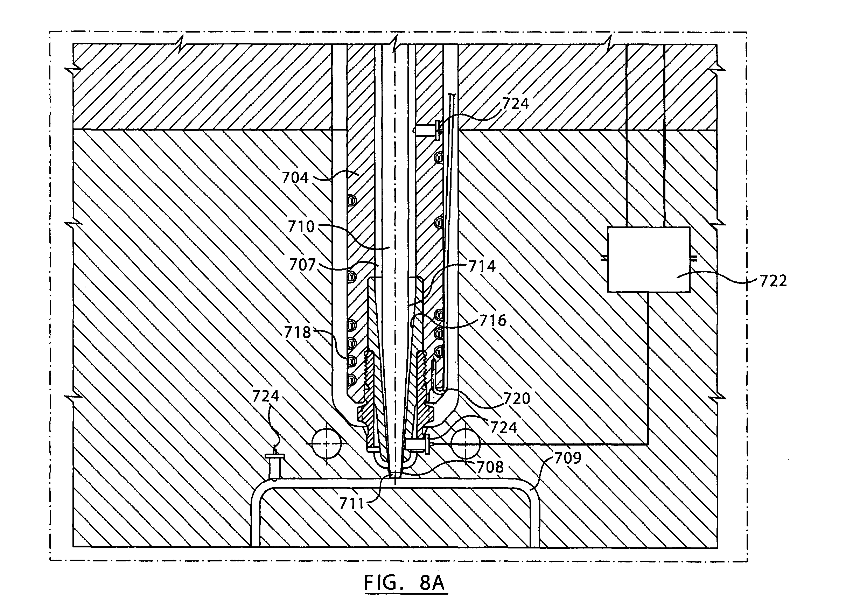

FIGS. 7, 7A, 8, and 8A show another embodiment of the present invention depicting another possible configuration of a flow control surface 714 and a second flow control surface 716 within an injection molding system 700. System 700 functions similarly as described above with respect to the first embodiment. In system 700, flow control surface 714 is located at a transition portion of the shaft of valve pin 710. Above the transition portion and flow control surface 714 the shaft of valve pin 710 has a first outer diameter, and below the transition portion and flow control surface 714 the shaft of valve pin 710 is tapered through valve pin head 711. Nozzle melt channel 707 has a complementary geometry at second flow control surface 716. In a first position, shown in FIGS. 7 and 7A, flow control surface 714 is positioned away from second flow control surface 716 so that the flow of melt through nozzle melt channel 707 is not constricted. In a second position, shown in FIGS. 8 and 8A, flow control surface 714 is positioned near second flow control surface 716. Due to the complementary geometry of flow control surface 714 and second flow control surface 716, the flow of melt through nozzle melt channel 707 is constricted. Further, in as shown in FIGS. 8 and 8A, valve pin head 711 is seated within gate 708, thereby stopping the flow of material to mold cavity 709.

Valve pin 710 may also be of a shorter length (not shown) such that it cannot seat in gate 708. In this embodiment, the shorter valve pin regulates the flow of the melt through nozzle 704, but does not prevent the flow of melt into the mold cavity. Thermal gating, though heating element 718 and temperature sensor 720, are used to regulate the flow of melt into the mold cavity.

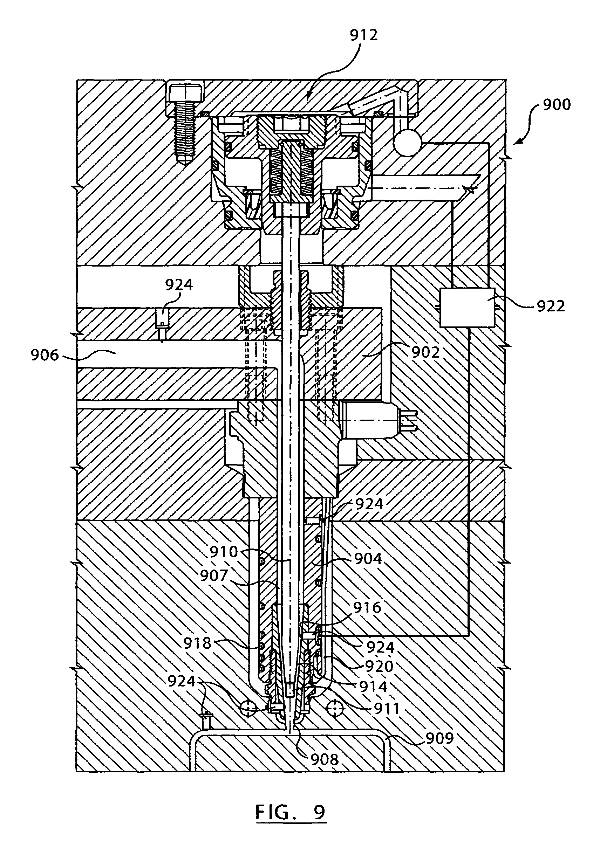

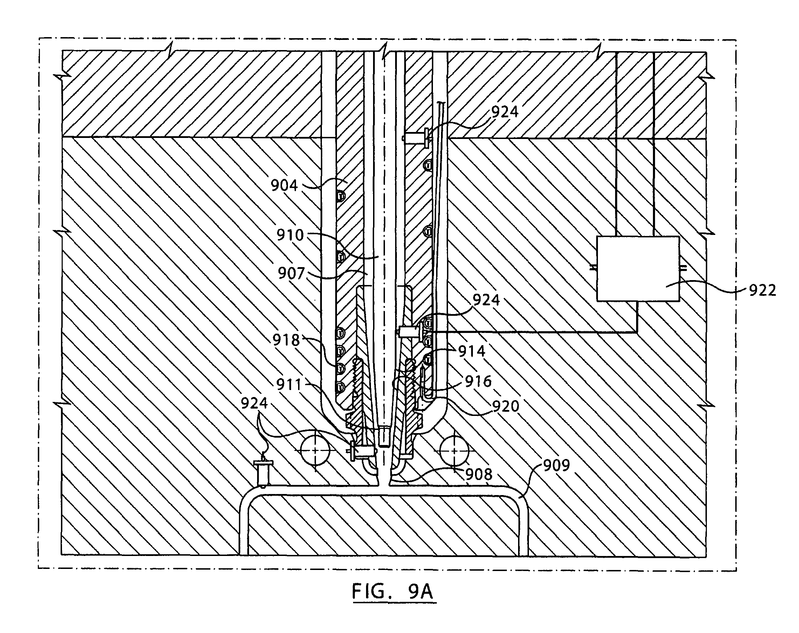

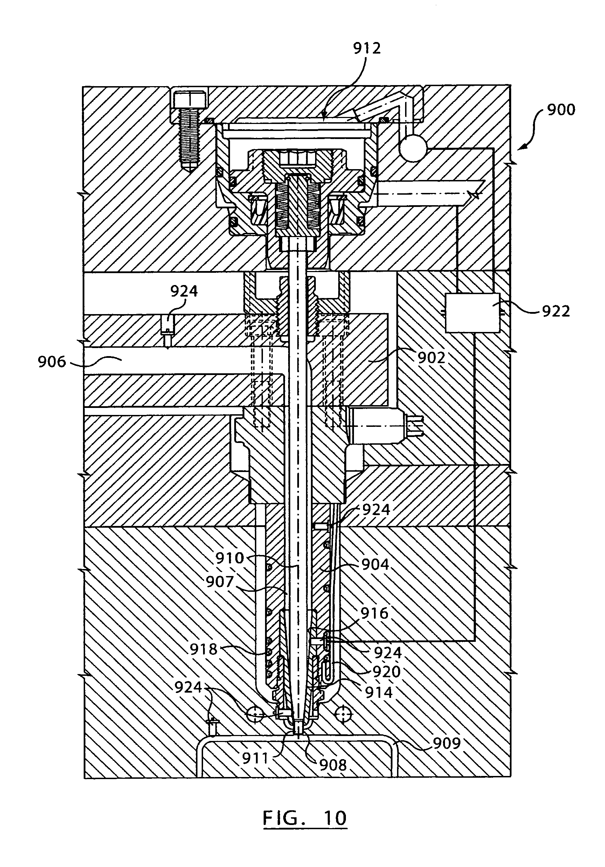

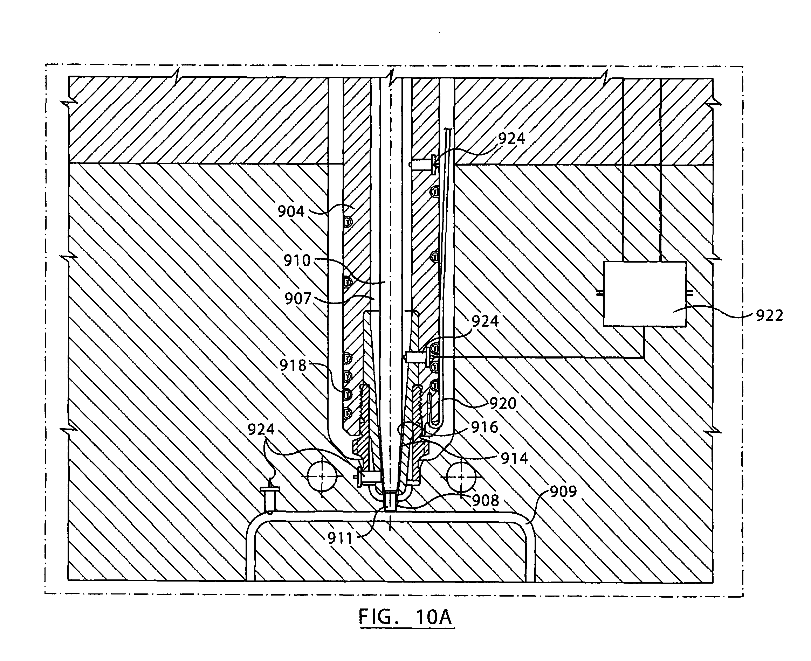

FIGS. 9, 9A, 10, and 10A show another embodiment of the present invention, depicting another possible configuration of a flow control surface 914 and a second flow control surface 916 within an injection molding system 900. System 900 functions similarly as described above with respect to the first embodiment. Similar to the embodiment described in connection with FIGS. 7, 7A, 8, and 8A, flow control surface 914 is located at a transition portion of the shaft of valve pin 910. Above the transition portion and flow control surface 914 the shaft of valve pin 910 has a first outer diameter, and below the transition portion and flow control surface 914 the shaft of valve pin 910 is tapered through valve pin head 911. Nozzle melt channel 907 has a complementary geometry at second flow control surface 916. However, in this embodiment, valve pin head 911 is relatively longer than valve pin head 711, and therefore extends closer to mold gate 908.

In a first position, shown in FIGS. 9 and 9A, flow control surface 914 is positioned away from second flow control surface 916 so that the flow of melt through nozzle melt channel 907 is not constricted. In a second position, shown in FIGS. 10 and 10A, flow control surface 914 is positioned near second flow control surface 916. Due to the complementary geometry of flow control surface 914 and second flow control surface 916, the flow of melt through nozzle melt channel 907 is constricted. Further, in as shown in FIGS. 10 and 10A, valve pin head 911 is seated within gate 908, thereby stopping the flow of material to mold cavity 909.

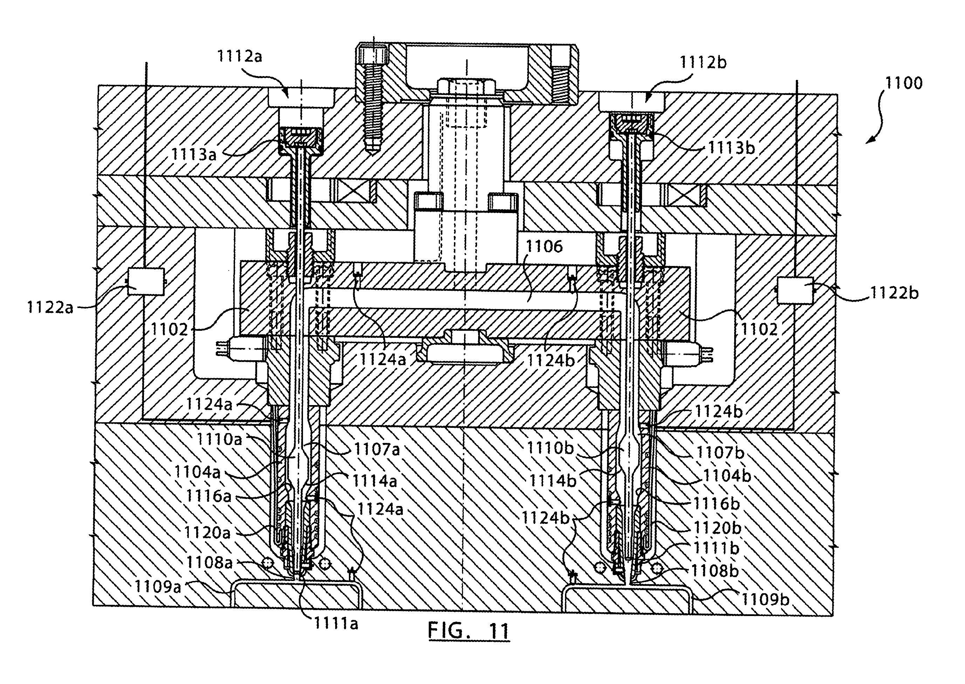

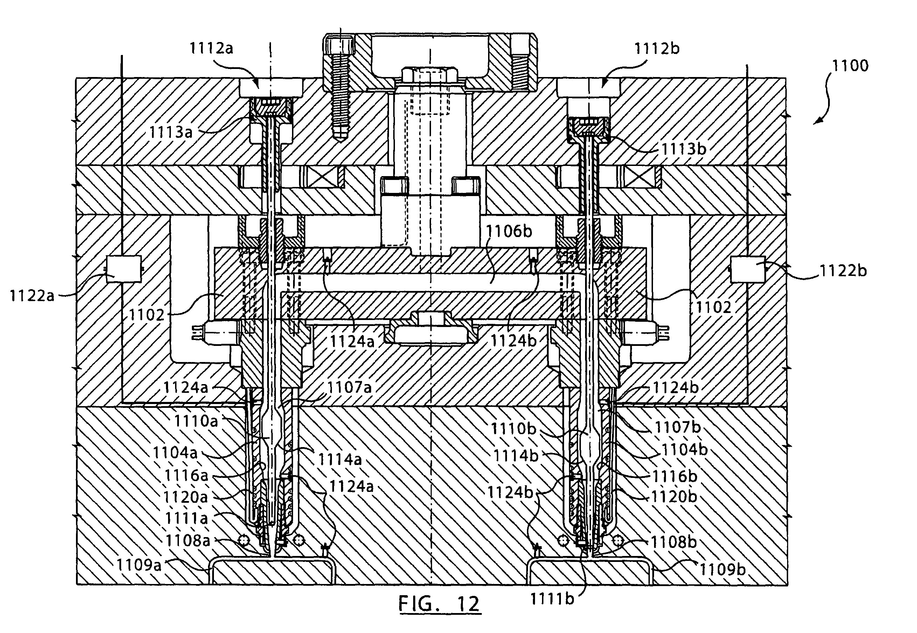

FIGS. 11 and 12 show another application of the present invention wherein a first nozzle 1104a is feeding a first mold cavity 1109a and a second nozzle 1104b is simultaneously feeding a second cavity 1109b. Valve pins 1110a and 1110b are positioned in the same configuration as shown in FIG. 1, and function similarly as described above with respect to the first embodiment. First mold cavity 1109a and second mold cavity 1109b may be of an equal or substantially equal size and shape, or may be of different sizes and shapes. Multiple cavities of different sizes may be filled in the same cycle or time period due to the flow control provided by valve pins 1110a and 1110b. FIG. 11 shows flow control surface 1114a of valve pin 1110a positioned near second flow control surface 1116a thereby constricting the flow of melt into first mold cavity 1109a, while flow control surface 1114b of valve pin 1110b is positioned away from second flow control surface 1116b thereby freely allowing the flow of melt into second cavity 1109b. In FIG. 12, flow control surface 1114a of valve pin 1110a is positioned away from second flow control surface 1116a thereby freely allowing the flow of melt into first mold cavity 1109a, while flow control surface 1114b of valve pin 1110b is near from second flow control surface 1116b thereby constricting the flow of melt into second cavity 1109b.

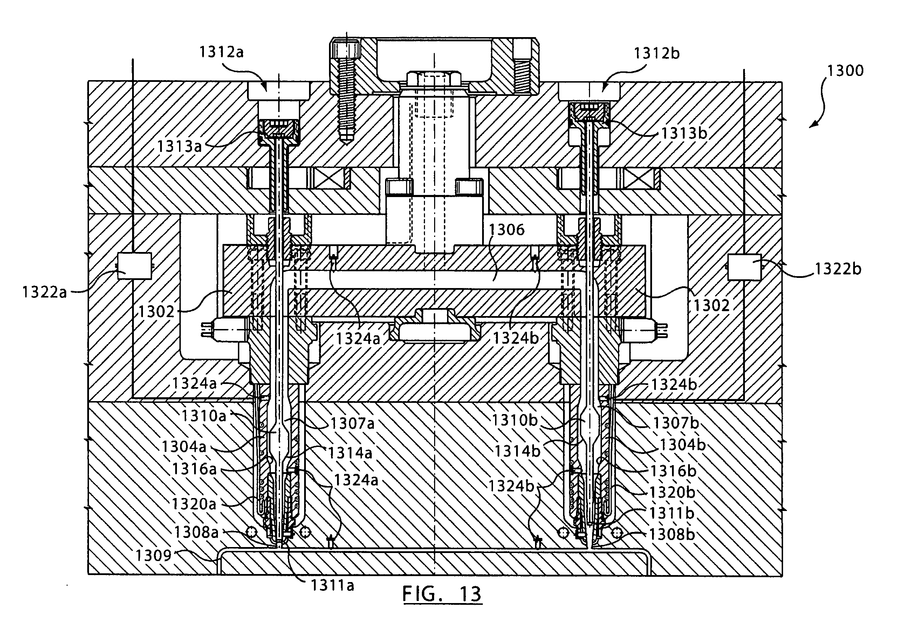

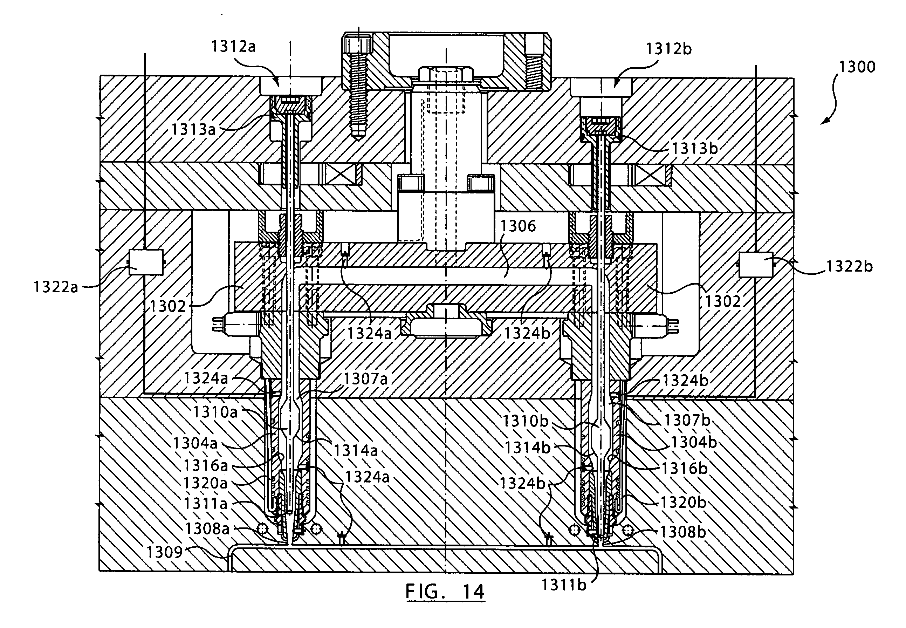

FIGS. 13 and 14 show an application of the present invention wherein multiple nozzles 1304a and 1304b are feeding one large mold cavity 1309. Valve pins 1310a and 1310b are positioned in the same configuration as shown in FIG. 1, and function similarly as described above with respect to the first embodiment. In this embodiment of the present invention, the positions of valve pins 1310a and 1310b are controlled in such as manner to produce an acceptable knit line where the melt from each nozzle 1304a and 1304b meets within mold cavity 1309. FIG. 13 shows flow control surface 1314a of valve pin 1310a positioned near second flow control surface 1316a thereby constricting the flow of melt into mold cavity 1309, while flow control surface 1314b of valve pin 1310b is positioned away from second flow control surface 1316b thereby freely allowing the flow of melt into mold cavity 1309. In FIG. 14, flow control surface 1314a of valve pin 1310a is positioned away from second flow control surface 1316a thereby freely allowing the flow of melt into mold cavity 1309, while flow control surface 1314b of valve pin 1310b is near second flow control surface 1316b thereby constricting the flow of melt into second cavity 1309b. It would be understood to one of ordinary skill in the art that each valve pin is independently actuated to controllably regulate the flow of the melt to achieve optimal molding conditions within the mold cavity and thereby produce an improved molded part.

While in FIGS. 11, 12, 13, and 14, one valve pin is shown near the second flow control surface and the other valve pin is shown positioned away from the second flow control surface, it should be understood that both valve pins may simultaneously be near or away from the second flow control surface dependent on the molding conditions, and that each valve pin is actuatable to control flow of melt from the nozzle channel to the mold cavity at various intermediate positions.

While various embodiments of the present invention have been described above, it should be understood that they have been presented by way of example only, and not limitation. It will be apparent to persons skilled in the relevant art that various changes in form and detail can be made therein without departing from the spirit and scope of the invention. Thus, the breadth and scope of the present invention should not be limited by any of the above-described exemplary embodiments, but should be defined only in accordance with the following claims and their equivalents. All patents and publications discussed herein are incorporated in their entirety by reference thereto.

## Claims

1. An injection molding system comprising:
a manifold having a plurality of manifold melt channels for conveying a melt stream;
a plurality of nozzles, wherein each nozzle has a nozzle melt channel fluidly connected at a first end to a respective manifold melt channel and at a second end to a mold gate of a separate mold cavity, the nozzle further including an actuated valve pin slidably positionable within the nozzle melt channel having a head portion for opening and closing the mold gate, wherein the valve pin has a flow control surface upstream of the head portion thereof that is slidably positionable for controlling the flow rate of the melt stream through the nozzle melt channel towards the mold gate.

2. The injection molding system of claim 1, wherein each mold cavity is of substantially equal volume.

3. The injection molding system of claim 1, wherein at-least one mold cavity is of a different volume.

4. The injection molding system of claim 1, wherein a position of the valve pin flow control surface within the nozzle melt channel is determined based on processing information received from at least one processing sensor.

5. The injection molding system of claim 4, wherein the at least one processing sensor receives processing information from the nozzle melt channel.

6. The injection molding system of claim 5, wherein the at least one processing sensor is either a pressure sensor or a temperature sensor.

7. The injection molding system of claim 4, wherein the at least one processing sensor receives information from the mold cavity.

8. The injection molding system of claim 7, wherein the at least one processing sensor is either a pressure sensor or a temperature sensor.

9. The injection molding system of claim 1, wherein the flow control surface is a radially expanded portion of the valve pin that constricts the flow of the melt stream when positioned within a portion of the nozzle melt channel having a complementary shape to that of the flow control surface.

10. An injection molding system comprising:
a plurality of nozzles, wherein each nozzle has a melt channel for conveying a melt stream into a separate mold cavity through a mold gate; and
an actuated valve pin slidably positionable within the nozzle melt channel having a tip portion for closing the mold gate to stop the flow of the melt stream into said mold cavity and a first flow control surface on an upstream portion of the valve pin for controlling a flow rate of the melt stream within the melt channel, wherein the first flow control surface has a corresponding second flow control surface as a portion of the melt channel such that the flow rate of the melt stream is reduced when the first flow control surface of the valve pin is slidably positioned at or near the second flow control surface of the nozzle melt channel.

11. The injection molding system of claim 10, wherein each mold cavity is of substantially equal volume.

12. The injection molding system of claim 10, wherein at least one mold cavity is of a different volume.

13. The injection molding system of claim 10, wherein the plurality of nozzles are hot runner nozzles operating at a first temperature.

14. The injection molding system of claim 13, wherein the flow rate of melt through each hot runner nozzle is independently controlled such that the flow rate of melt through the respective nozzle melt channel is reduced when the temperature of the hot runner nozzle is reduced below the first temperature.

15. The injection molding system of claim 13, wherein the flow rate of melt through each hot runner nozzle is independently controlled such that the flow rate of melt through the respective nozzle melt channel is increased when the temperature of the hot runner nozzle is increased above the first temperature.

16. The injection molding system of claim 10, wherein the plurality of nozzles are hot runner nozzles operating at a first pressure.

17. The injection molding system of claim 16, wherein the flow rate of melt through each hot runner nozzle is independently controlled such that the flow rate of melt through the respective nozzle melt channel is increased when the pressure of the hot runner nozzle is reduced below the first pressure.

18. The injection molding system of claim 16, wherein the flow rate of melt through each hot runner nozzle is independently controlled such that the flow rate of melt through the respective nozzle melt channel is decreased when the pressure of the hot runner nozzle is increased above the first pressure.

19. A method of injection molding comprising:
providing a plurality of mold cavities of substantially equal volume, such that each mold cavity is fed by a single mold gate;
injecting a molten material via an injection molding manifold into a plurality of hot runner nozzles, wherein each nozzle is in fluid communication with a respective mold cavity via a respective mold gate, and each nozzle having a nozzle melt channel with a valve pin therein; and
independently actuating each valve pin in its respective nozzle melt channel into an injection open position that is defined as a distance D between a flow control surface of the valve pin and the mold gate, wherein a distance D varies from one nozzle to another such that each mold cavity is filled with substantially the same amount of molten material during an injection cycle.

20. The method of claim 19, where the injection open position defined by the distance D of each nozzle is determined by a processing sensor located along the respective nozzle melt channel.

21. The method of claim 20, wherein the processing sensor is either a temperature sensor or a pressure sensor.

22. A method of injection molding comprising:
providing a plurality of mold cavities, such that each mold cavity is fed by a single mold gate;
injecting a molten material via an injection molding manifold into a plurality of hot runner nozzles, wherein each nozzle is in fluid communication with a respective mold cavity via a respective mold gate, and each nozzle having a nozzle melt channel with a movable valve pin therein, wherein the valve pin has a tip portion to close the mold gate and a flow control surface located in the nozzle melt channel upstream from said tip portion; and
reducing the amount of molten material injected through each nozzle into each mold cavity by individually and independently moving the valve pin flow control surface in the nozzle melt channel toward its respective mold cavity before closing each mold gate with the tip portion of the valve pin.

23. The method of claim 22, wherein an injection position is determined by a processing sensor located along the respective nozzle melt channel.

24. The method of claim 23, wherein the processing sensor is either a temperature sensor or a pressure sensor.

25. The method of claim 22, where each mold cavity has substantially the same volume.

26. The method of claim 22, wherein at least one mold cavity has a different volume.
